# EUROPEAN PATENT SPECIFICATION

(11) **EP 3 467 426 B1**
(45) Date of publication and mention of the grant of the patent: **18.11.2026**
(21) Application number: 18194191.5
(22) Date of filing: 13.09.2018
(51) Int. Cl.: F41G 7/22, F16F 15/00, G02B 27/64, G02B 7/02

(54) **ACTIVE ISOLATION FOR SEEKER OPTICS**
AKTIVE ISOLIERUNG FÜR SUCHEROPTIK
ISOLATION ACTIVE POUR OPTIQUE DE CHERCHEUR

(30) Priority: 20.09.2017 US 201715709852
(43) Date of publication of application: 10.04.2019
(73) Proprietor: Raytheon Company, Arlington, VA 22209 (US)
(72) Inventor: GRAHAM, Jason, Prior Lake, MN 55372 (US)
(74) Representative: Dehns

(56) References cited:
- EP-A1- 3 205 972
- WO-A1-2016/092081
- US-A- 4 500 051
- US-A1- 2005 258 338
- US-A1- 2008 217 465
- US-A1- 2011 226 955
- US-A1- 2012 138 728
- US-H- H2 265

## Description

### BACKGROUND

The disclosed subject matter relates generally to imaging apparatus and methods, and more specifically to optical elements usable in air vehicles and munitions.

Quality imaging optical components are made from crystalline and glass materials, which are very brittle and sensitive to stress concentrations and tensile stresses. Mounting elements made from these materials for survival under high launch and impact acceleration and forces such as unmanned air vehicles, rockets, and gun launches can be very challenging due to catastrophic failure modes of these brittle materials. Any existing or new stress concentration can cause a fracture initiation point and the optical element can be prone to shattering.

Methods are needed to counter internal stresses resulting from shock or other impact events in imaging optical systems.

US 2008/217465 A1 discloses a vibration controlled housing including a housing structure and a mechanism for receiving a control signal and in accordance therewith electronically tuning a structural response of the structure.

### SUMMARY

From a first aspect of the invention, an optical system as claimed in claim 1 is provided.

The system of the preceding paragraph can optionally include any one or more of the following features, configurations and/or additional components:
The cylindrical accelerometer may be a piezoelectric accelerometer.

The cylindrical accelerometer may be a piezoresistive accelerometer.

The cylindrical accelerometer may be a shear stress film sensor on an outside surface of the cylindrical mechanical actuator.

The optical lens may operate at wavelengths from infrared to visible.

A missile seeker system as recited in claim 6 is provided.

From a further aspect of the invention, a method of forming an optical system as claimed in claim 7 is provided.

The method of the preceding paragraph can optionally include any one or more of the following features, configurations and/or additional components.

The cylindrical accelerometer may be a piezoelectric accelerometer.

The cylindrical accelerometer may be a piezoresistive accelerometer.

The cylindrical accelerometer may be a shear stress film sensor.

The optical system may be included in a missile seeker system.

### BRIEF DESCRIPTION OF THE DRAWINGS

FIG. 1 is a schematic view of a cross section of a seeker lens stack according to the present disclosure.
FIG. 2 is a flow diagram of a method of forming an optical system according to the present disclosure.

### DETAILED DESCRIPTION

Seeker optical systems in gun launched weaponry need to be hardened against setback and set forward shocks caused by launch and flight accelerations in order for the system to function correctly. Most, if not all, optical elements in systems across the optical spectrum need protection against shock induced fracture. The system disclosed herein addresses this issue.

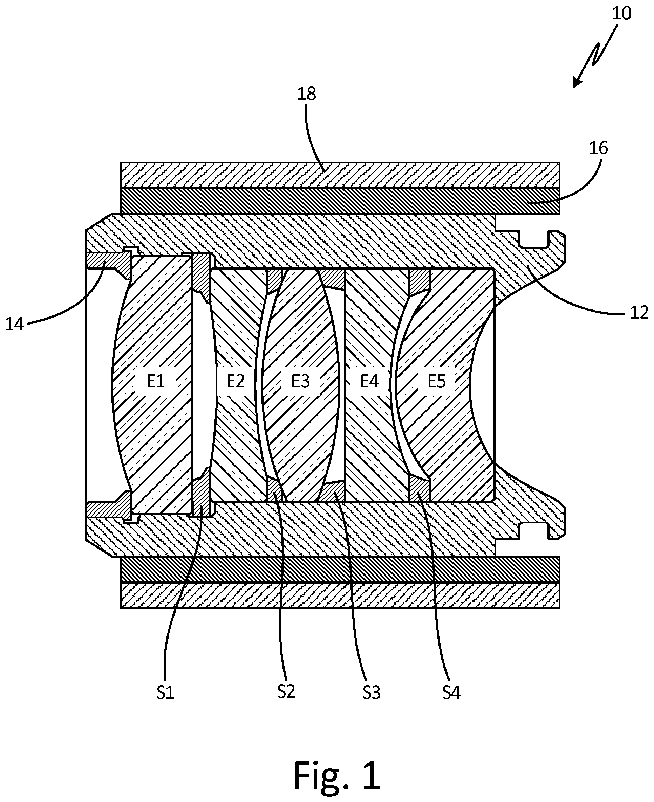

FIG. 1 is a schematic view of a cross section of an optical lens stack according to the present disclosure. Optical lens stack 10 includes cylindrical optical elements E1-E5 and spacers S1-S4 in cylindrical metal holder 12. In the embodiment shown, there are five optical elements. There may be more or less than five in other embodiments depending on the system requirements. The window of wavelength with which the stack may operate may range from infrared to visible. Retaining ring 14 may be positioned on the end of the stack of optical elements to secure the stack. In the context of the present disclosure, optical lens stack 10 is designed for use in a smart optical seeker system where smart is defined as any method or device having both sensing and control capabilities.

Optical lens stack 10 further include piezoelectric cylinder 16 attached to and surrounding metal holder 12 and attached to a control system and power supply and cylindrical accelerometer 18 surrounding piezoelectric cylinder 16 attached to a control system and power supply. In an embodiment, accelerometer 18 may be a piezoresistive accelerometer attached to a control system and power supply and attached to piezoelectric cylinder 16. In other embodiments, other accelerometers known in the art may be utilized. During launch of a munition, a signal from accelerometer 18 is sent through electrical connections, not shown, to a central control system and power supply, where the signal is inverted and sent to piezoelectric cylinder 16. The mechanical response of piezoelectric cylinder 16 counteracts the deformation of metal cylinder 12 during launch, and nulls the high frequency vibration of the optical stack, thereby minimizing or preventing fracture of optical elements E1-E5 in metal holder 12 during a launch.

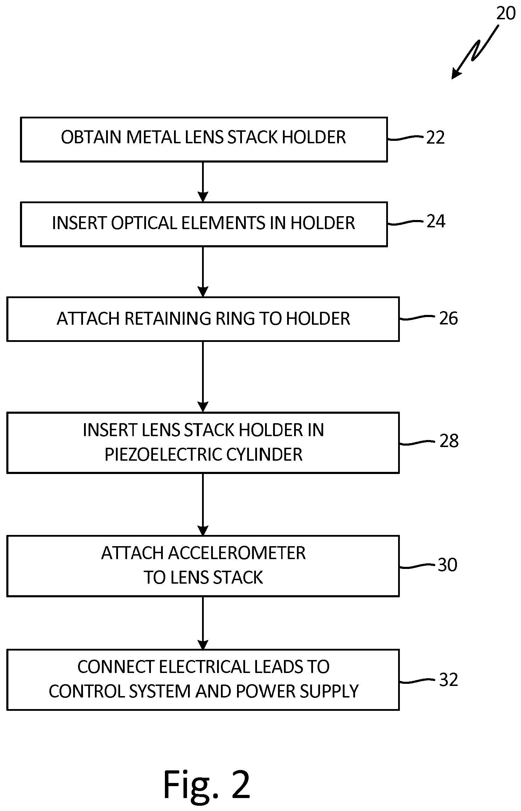

FIG. 2 is a flow diagram of a method of forming optical lens stack 10. In the first step of method 20, metal lens stack holder 12 is formed (Step 22). Optical elements E1-E5 and spacers S1-S4 are then inserted in metal holder 12 (Step 24). The lens stack is then inserted in piezoelectric cylinder 16 and secured to piezoelectric cylinder 16 by epoxy or other adhesives (Step 30). Accelerometer 18 is then attached to piezoelectric cylinder 12 (Step 32). In an embodiment, the accelerometer may be a cylindrical piezoresistive accelerometer. In another embodiment the accelerometer may be a shear stress film sensor. Other accelerometers known in the art may be utilized.

Electrical leads of the accelerometer and piezoelectric cylinder are then connected to a central control system and power supply. During launch of a munition, a signal from accelerometer 18 is sent through the electrical connections to a central control system and power supply where the signal is inverted and sent to piezoelectric cylinder 16. The mechanical response of piezoelectric cylinder 16 counteracts the deformation caused by launch and flight accelerations of metal holder 12 and nulls the high frequency vibration of the optical stack thereby minimizing or preventing fracture of optical elements E1-E5 in metal holder 12 during a launch.

It is intended that the invention not be limited to the particular embodiment(s) disclosed, but that the invention will include all embodiments falling within the scope of the appended claims.

## Claims

1. An optical system configured to counteract deformation and vibration due to a munition launch, and flight acceleration, the optical system comprising:
a control system and power supply;
a metal cylindrical holder (12);
a cylindrical optical lens stack (10) formed from a plurality of optical elements disposed in the metal cylindrical holder (12);
a piezoelectric cylindrical actuator (16) attached to and surrounding the metal cylindrical holder (12) and connected to the control system and power supply; and
a cylindrical accelerometer (18) attached to and surrounding the piezoelectric cylindrical actuator (16), and connected to the control system and power supply,
wherein the control system and power supply is configured to receive a signal from the cylindrical accelerometer (18) and to invert and amplify the signal and to send the signal, inverted and amplified, to the piezoelectric cylindrical actuator so as to counteract deformation and vibration caused by the munition launch and flight acceleration on the metal cylindrical holder (12) to minimize deformation of the cylindrical optical lens stack.

2. The system of claim 1, wherein the cylindrical accelerometer (18) is a piezoelectric accelerometer attached to the control system and power supply.

3. The system of claim 1, wherein the cylindrical accelerometer (18) is a piezoresistive accelerometer attached to the control system and power supply.

4. The system of claim 1, wherein the cylindrical accelerometer (18) is a shear stress film sensor on an outside surface of the piezoelectric cylindrical actuator (16).

5. The system of any preceding claim, wherein the cylindrical optical lens stack (10) operates at wavelengths from infrared to visible.

6. A missile seeker system comprising the system of any preceding claim.

7. A method of forming an optical system configured to counteract deformation and vibration due to a munition launch and flight accelerations, the method comprising:
forming a multi-lens cylindrical optical lens stack (10) in a metal cylindrical holder (12);
inserting the metal cylindrical holder (12) in a piezoelectric cylindrical actuator (16) and connecting the piezoelectric cylindrical actuator (16) to a control system and power supply;
surrounding the cylindrical optical lens stack (10) with a cylindrical accelerometer (18) and connecting the cylindrical accelerometer (18) to the control system and power supply,
wherein the control system and power supply is configured to receive a signal from the cylindrical accelerometer (18) and invert and amplify the signal and send the signal, inverted and amplified, to the piezoelectric cylindrical actuator so as to counteract deformation and vibration caused by the munition launch and flight acceleration on the metal cylindrical holder (12) to minimize deformation of the optical lens stack.

8. The method of claim 7, wherein the cylindrical accelerometer (18) is a piezoelectric accelerometer.

9. The method of claim 7, wherein the cylindrical accelerometer (18) is a piezoresistive accelerometer.

10. The method of claim 7, wherein the cylindrical accelerometer (18) is a shear stress film sensor.

11. The method of any of claims 7 to 10, wherein the optical system is included in a missile seeker system.

## Patentansprüche

1. Optisches System, das konfiguriert ist, Verformungen und Vibrationen infolge eines Munitionsstarts und von Flugbeschleunigung entgegenzuwirken, wobei das optische System Folgendes umfasst:
ein Steuerungssystem und eine Stromversorgung;
einen metallischen zylindrischen Halter (12);
einen zylindrischen optischen Linsenstapel (10), der aus einer Mehrzahl von optischen Elementen ausgebildet ist, die in dem metallischen zylindrischen Halter (12) angeordnet sind;
einen piezoelektrischen zylindrischen Aktuator (16), der an dem metallischen zylindrischen Halter (12) befestigt ist und diesen umgibt und mit dem Steuerungssystem und der Stromversorgung verbunden ist; und
einen zylindrischen Beschleunigungsmesser (18), der an dem piezoelektrischen zylindrischen Aktuator (16) befestigt ist und diesen umgibt und mit dem Steuerungssystem und der Stromversorgung verbunden ist,
wobei das Steuerungssystem und die Stromversorgung konfiguriert sind, ein Signal von dem zylindrischen Beschleunigungsmesser (18) zu empfangen und dieses Signal zu invertieren und zu verstärken und das invertierte und verstärkte Signal an den piezoelektrischen zylindrischen Aktuator zu senden, um Verformungen und Vibrationen an dem metallischen zylindrischen Halter (12), verursacht durch den Munitionsstart und Flugbeschleunigung, entgegenzuwirken, um eine Verformung des zylindrischen optischen Linsenstapels zu minimieren.

2. System nach Anspruch 1, wobei der zylindrische Beschleunigungsmesser (18) ein piezoelektrischer Beschleunigungsmesser ist, der an dem Steuerungssystem und der Stromversorgung befestigt ist.

3. System nach Anspruch 1, wobei der zylindrische Beschleunigungsmesser (18) ein piezoresistiver Beschleunigungsmesser ist, der an dem Steuerungssystem und der Stromversorgung befestigt ist.

4. System nach Anspruch 1, wobei der zylindrische Beschleunigungsmesser (18) ein Scherspannungsfilmsensor auf einer Außenoberfläche des piezoelektrischen zylindrischen Aktuators (16) ist.

5. System nach einem der vorhergehenden Ansprüche, wobei der zylindrische optische Linsenstapel (10) bei Wellenlängen von einem Infrarotbereich bis zu einem sichtbaren Bereich arbeitet.

6. Flugkörpersuchersystem, umfassend das System nach einem der vorhergehenden Ansprüche.

7. Verfahren zum Ausbilden eines optischen Systems, das konfiguriert ist, Verformungen und Vibrationen infolge eines Munitionsstarts und Flugbeschleunigungen entgegenzuwirken, wobei das Verfahren Folgendes umfasst:
Ausbilden eines mehrere Linsen enthaltenden zylindrischen optischen Linsenstapels (10) in einem metallischen zylindrischen Halter (12);
Einführen des metallischen zylindrischen Halters (12) in einen piezoelektrischen zylindrischen Aktuator (16) und Verbinden des piezoelektrischen zylindrischen Aktuators (16) mit einem Steuerungssystem und einer Stromversorgung;
Umgeben des zylindrischen optischen Linsenstapels (10) mit einem zylindrischen Beschleunigungsmesser (18) und Verbinden des zylindrischen Beschleunigungsmessers (18) mit dem Steuerungssystem und der Stromversorgung,
wobei das Steuerungssystem und die Stromversorgung konfiguriert sind, ein Signal von dem zylindrischen Beschleunigungsmesser (18) zu empfangen und dieses Signal zu invertieren und zu verstärken und das invertierte und verstärkte Signal an den piezoelektrischen zylindrischen Aktuator zu senden, um Verformungen und Vibrationen an dem metallischen zylindrischen Halter (12), verursacht durch den Munitionsstart und Flugbeschleunigung, entgegenzuwirken, um eine Verformung des optischen Linsenstapels zu minimieren.

8. Verfahren nach Anspruch 7, wobei der zylindrische Beschleunigungsmesser (18) ein piezoelektrischer Beschleunigungsmesser ist.

9. Verfahren nach Anspruch 7, wobei der zylindrische Beschleunigungsmesser (18) ein piezoresistiver Beschleunigungsmesser ist.

10. Verfahren nach Anspruch 7, wobei der zylindrische Beschleunigungsmesser (18) ein Scherspannungsfilmsensor ist.

11. Verfahren nach einem der Ansprüche 7 bis 10, wobei das optische System in einem Flugkörpersuchersystem enthalten ist.

## Revendications

1. Système optique configuré pour contrer la déformation et les vibrations dues au lancement d'une munition et à l'accélération en vol, le système optique comprenant :
un système de commande et une alimentation électrique ;
un support cylindrique métallique (12) ;
un empilement de lentilles optiques cylindrique (10) formé d'une pluralité d'éléments optiques disposés dans le support cylindrique métallique (12) ;
un actionneur cylindrique piézoélectrique (16) fixé au support cylindrique métallique (12) et l'entourant, et connecté au système de commande et à l'alimentation électrique ; et
un accéléromètre cylindrique (18) fixé à l'actionneur cylindrique piézoélectrique (16) et l'entourant, et connecté au système de commande et à l'alimentation électrique ,
dans lequel le système de commande et l'alimentation électrique sont configurés pour recevoir un signal à partir de l'accéléromètre cylindrique (18) et pour inverser et amplifier le signal et envoyer le signal, inversé et amplifié, à l'actionneur cylindrique piézoélectrique afin de contrer la déformation et les vibrations dues au lancement de la munition et à l'accélération en vol sur le support cylindrique métallique (12) afin de minimiser la déformation de l'empilement de lentilles optiques cylindrique.

2. Système selon la revendication 1, dans lequel l'accéléromètre cylindrique (18) est un accéléromètre piézoélectrique fixé au système de commande et à l'alimentation électrique.

3. Système selon la revendication 1, dans lequel l'accéléromètre cylindrique (18) est un accéléromètre piézorésistif fixé au système de commande et à l'alimentation électrique.

4. Système selon la revendication 1, dans lequel l'accéléromètre cylindrique (18) est un capteur de film de contrainte de cisaillement sur une surface extérieure de l'actionneur cylindrique piézoélectrique (16).

5. Système selon une quelconque revendication précédente, dans lequel l'empilement de lentilles optiques cylindrique (10) fonctionne à des longueurs d'onde allant de l'infrarouge au visible.

6. Système de chercheur de missile comprenant le système selon une quelconque revendication précédente.

7. Procédé de formation d'un système optique configuré pour contrer la déformation et les vibrations dues au lancement d'une munition et aux accélérations en vol, le procédé comprenant :
la formation d'un empilement de lentilles optiques cylindrique multi-lentilles (10) dans un support cylindrique métallique (12) ;
l'insertion du support cylindrique métallique (12) dans un actionneur cylindrique piézoélectrique (16) et la connexion de l'actionneur cylindrique piézoélectrique (16) à un système de commande et à une alimentation électrique ;
le fait d'entourer l'empilement de lentilles optiques cylindrique (10) avec un accéléromètre cylindrique (18) et la connexion de l'accéléromètre cylindrique (18) au système de commande et à l'alimentation électrique,
dans lequel le système de commande et l'alimentation électrique sont configurés pour recevoir un signal à partir de l'accéléromètre cylindrique (18) et inverser et amplifier le signal, et envoyer le signal, inversé et amplifié, à l'actionneur cylindrique piézoélectrique afin de contrer la déformation et les vibrations dues au lancement de la munition et à l'accélération en vol sur le support cylindrique métallique (12) afin de minimiser la déformation de l'empilement de lentilles optiques.

8. Procédé selon la revendication 7, dans lequel l'accéléromètre cylindrique (18) est un accéléromètre piézoélectrique.

9. Procédé selon la revendication 7, dans lequel l'accéléromètre cylindrique (18) est un accéléromètre piézorésistif.

10. Procédé selon la revendication 7, dans lequel l'accéléromètre cylindrique (18) est un capteur de film de contrainte de cisaillement.

11. Procédé selon l'une quelconque des revendications 7 à 10, dans lequel le système optique est inclus dans un système de chercheur de missile.
